(19) Europäisches Patentamt
European Patent Office
Office européen des brevets

(11) **EP 4 356 081 B1**

(12) **EUROPÄISCHE PATENTSCHRIFT**

(45) Veröffentlichungstag und Bekanntmachung des Hinweises auf die Patenterteilung:
**21.01.2026 Patentblatt 2026/04**

(21) Anmeldenummer: **22729663.9**

(22) Anmeldetag: **19.05.2022**

(51) Internationale Patentklassifikation (IPC):
**G01F 23/284** (2006.01)    **G01F 23/80** (2022.01)
**G01S 7/41** (2006.01)    **G01S 7/292** (2006.01)
**G06N 20/00** (2019.01)

(52) Gemeinsame Patentklassifikation (CPC):
**G01F 23/284; G01F 23/80; G01S 7/2923; G01S 7/417; G06N 20/00**

(86) Internationale Anmeldenummer:
**PCT/EP2022/063604**

(87) Internationale Veröffentlichungsnummer:
**WO 2022/263100 (22.12.2022 Gazette 2022/51)**

(54) **GRENZSCHICHT-DETEKTION MIT EINEM MASCHINELLEN LERN-ALGORITHMUS**

DETECTING A BOUNDARY LAYER USING A MACHINE LEARNING ALGORITHM

DÉTECTION D'UNE COUCHE LIMITE À L'AIDE D'UN ALGORITHME D'APPRENTISSAGE AUTOMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.06.2021 DE 102021115871**

(43) Veröffentlichungstag der Anmeldung:
**24.04.2024 Patentblatt 2024/17**

(73) Patentinhaber: **Endress+Hauser SE+Co. KG 79689 Maulburg (DE)**

(72) Erfinder:
• **MALINOVSKIY, Alexey**
**79689 Maulburg (DE)**
• **REIMELT, Ralf**
**79110 Freiburg (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
DE-A1- 102007 060 579    DE-A1- 102009 055 262
DE-A1- 4 223 346    US-A1- 2012 299 768

• BORG DENIS ET AL: "Machine-learning classification of environmental conditions inside a tank by analyzing radar curves in industrial level measurements", FLOW MEASUREMENT AND INSTRUMENTATION, BUTTERWORTH-HEINEMANN, OXFORD, GB, vol. 79, 5 April 2021 (2021-04-05), XP086614358, ISSN: 0955-5986, [retrieved on 20210405], DOI: 10.1016/J.FLOWMEASINST.2021.101940
• BORG DENIS ET AL: "Neural networks as a diagnosing tool for industrial level measurement through non-contacting radar type and support to the decision for its better application", IFAC-PAPERSONLINE, vol. 49, no. 30, 16 December 2016 (2016-12-16), DE, pages 349 - 354, XP055955616, ISSN: 2405-8963, DOI: 10.1016/j.ifacol.2016.11.160

**Beschreibung**

Die Erfindung betrifft Radar-basierte Grenzschicht-Detektion auf Basis maschineller Lern-Algorithmen.

In der Automatisierungstechnik, insbesondere zur Prozessautomatisierung werden vielfach Feldgeräte eingesetzt, mittels denen diverse Prozessgrößen erfassbar sind. Bei der zu bestimmenden Prozessgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Messprinzipien. Eine Vielzahl verschiedener Feldgeräte-Typen wird von der Firmen-Gruppe Endress + Hauser hergestellt und vertrieben.

Zur Füllstandsmessung von Füllgütern in Behältern haben sich Radar-basierte Messverfahren etabliert, da sie robust und wartungsarm sind. Dabei besteht ein zentraler Vorteil Radar-basierter Messverfahren in der Fähigkeit, den Füllstand quasi kontinuierlich und berührungslos messen zu können. Im Kontext dieser Patentanmeldung beziehen sich die Begriffe "*Radar*" bzw. "*Hochfrequenz*" auf elektromagnetische Wellen mit Frequenzen zwischen 0.03 GHz und 300 GHz. Übliche Frequenzbänder, bei denen Füllstandsmessung durchgeführt wird, liegen bei 2 GHz, 26 GHz, 79 GHz, oder 120 GHz. Die beiden gängigen Messprinzipien bilden hierbei das Pulslaufzeit-Prinzip (auch unter dem Begriff "*Pulsradar*" bekannt) sowie das FMCW-Prinzip *("Frequency Modulated Continuous Wave")*. Auf Basis des Pulslaufzeit-Verfahrens sowie auf Basis des FMCW-Verfahrens können Füllstandsmessgeräte mit vergleichsweise geringem schaltungstechnischem Aufwand und einer hohen Füllstands-Auflösung im Sub-Millimeterbereich realisiert werden. Näher beschrieben werden Radar-basierte Messprinzipien beispielsweise in *"Radar Level Detection, Peter Devine, 2000".*

Neben frei abstrahlender Radar-Messung, bei der die Hochfrequenz-Signale über eine Antenne ausgesendet bzw. empfangen werden, existiert zudem die Variante des geführten Radars. Hierbei dient anstelle der Antenne eine elektrisch leitfähige Mess-Sonde (bspw. ein Koaxial-Wellenleiter oder ein Metallstab), die zur Führung der Hochfrequenz-Signale in den Behälter hinuntergelassen ist. Analog zu frei abstrahlendem Radar wird das Hochfrequenz-Signal in der Mess-Sonde auf Höhe der Füllgutoberfläche reflektiert und entlang der Mess-Sonde zum Füllstandsmessgerät zurückgeleitet. Bekannt ist diese Variante der Radar-basierten Füllstandsmessung auch unter dem Begriff *"TDR"* ("*Time Domain Reflectometry*"). Vorteilhaft an dieser Variante ist, dass aufgrund der geführten Signalabstrahlung weniger Leistung zum Betrieb des Füllstandsmessgerätes erforderlich ist. Beschrieben ist ein TDR-basiertes Füllstandsmessgerät beispielsweise in der US-Patentschrift 10,07,743 B2.

Unabhängig vom Messprinzip (Pulslaufzeit, FMCW, TDR) wird der Füllstandswert bestimmt, indem aus dem reflektierten Empfangssignal das von der Füllgut-Oberfläche resultierende Signal-Maximum und dessen korrespondierender Abstands-Wert ermittelt wird. Allgemein beschrieben werden die verschiedenen Radar-basierten Messprinzipien beispielsweise in "*Radar Level Detection, Peter Devine, 2000*".

Je nach Art des Füllgutes, dessen Füllstand zu bestimmen ist, ist dieses gegebenenfalls mit Verunreinigungen, Aditiven oder Fremdstoffen durchsetzt, welche oberhalb oder unterhalb des Füllgutes eventuell eine additive Füllgutschicht, wie beispielsweise einen Schaum, ein Sediment oder eine ölige bzw. wässrige Phase ausbilden. In diesem Fall bildet sich zwischen dem eigentlichen Füllgut und der additiven Füllgutschicht auch eine mehr oder weniger stark ausgeprägte Grenzschicht, häufig auch als "*Trennschicht*" verstanden, aus. Dementsprechend kann die Füllstandsmessung durch etwaige, zusätzliche Füllgutschichten gestört oder verfälscht werden, da das entsprechende Signal-Maximum der Füllgut-Oberfläche nicht mit Sicherheit identifiziert werden kann. Aus diesem Grund ist es von Interesse, neben dem Füllstand des Füllgutes zudem das Vorhandensein oder sogar die Dicke einer additiven Füllgutschicht sicher detektieren zu können. Ein TDR-basiertes Füllstandsmessgerät, welches eine etwaige additive Füllgutschicht durch Vergleich der Amplitude mit einem theoretischen Soll-Wert ermittelt, wird in der europäischen Patentanmeldung 2 722 655 A1 beschrieben. Mittels Identifikation des entsprechenden Signal-Maximums ist eine Detektion jedoch auch in diesem Fall zumindest unsicher, da die additive Füllgutschicht bzw. dessen Oberfläche das entsprechende Signal gegebenenfalls nur sehr schwach reflektiert.

US 2012/299768 A1 offenbart ein Füllstandmessgerät zur Bestimmung der Position eines Füllstandes eines Füllgutes in einem Behälter und/oder einer Trennschicht zwischen zwei Füllgütern. Das Füllstandmessgerät weist eine Echokurvenerfassungseinrichtung zum Erfassen einer oder mehrerer Echokurven, eine Echoidentifikationseinrichtung zur Auswertung der zumindest einen Echokurve, eine Mehrfachechoerkennungseinrichtung zur Klassifizierung eines oder mehrerer Echos einer Mehrfachreflexion an einer Füllgutoberfläche und/oder an einem Behälterboden des Behälters als Mehrfachecho, sowie eine Selbstlerneinrichtung, die zur automatischen Ermittlung einer Domschachtlänge des Behälters unter Verwendung des von der Mehrfachechoerkennungseinrichtung klassifizierten Mehrfachechos ausgeführt ist, auf.

Der Erfindung liegt daher die Aufgabe zugrunde, eine etwaige Grenzschicht zuverlässig ermitteln zu können.

Die Erfindung löst diese Aufgabe durch ein entsprechendes Mess-System zur Grenzschicht-Detektion an einem Füllgut, das sich in einem Behälter befindet.

Hierzu umfasst das Mess-System folgende Komponenten:

- Ein Radar-basiertes Messgerät, mit

  ◦ einer Mess-Sonde, die sich in den Behälter erstreckt, mittels welcher Hochfrequenz-Signale gen Füllgut gesendet und nach Reflektion an der Füllgut-Oberfläche als Empfangs-Signale empfangen werden können,
  ◦ einer Signalerzeugungs-Einheit, die ausgelegt ist, gemäß des TDR-Verfahrens das auszusendende Hochfrequenz-Signal zu erzeugen, und mit
  ◦ einer Empfangs-Einheit, die ausgelegt ist, das Empfangs-Signal aufzuzeichnen, und

- eine Auswerte-Einheit, in welcher erfindungsgemäß ein maschineller Lern-Algorithmus ausgebildet ist, um anhand des Empfangs-Signals den Massen- bzw. Volumen-Anteil des Füllgutes in der Grenzschicht zu detektieren, indem der maschinelle Lern-Algorithmus entlang der Mess-Sonde eine Verteilung des Dämpfungskoeffizienten und/ oder des Dielektrizitätswertes im Behälter ermittelt.

Unter dem Begriff "*Einheit*" wird im Rahmen der Erfindung prinzipiell jede elektronische Schaltung verstanden, die für den angedachten Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung wie einen Microcontroller oder ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Mess-Systems im Sinne der Erfindung potenziell auch auf einen gemeinsamen physikalischen Speicher zurückgreifen bzw. physikalisch mittels derselben Digitalschaltung betrieben werden.

Durch die erfindungsgemäße Implementierung eines maschinellen Lern-Algorithmus wird das Problem umgangen, dass die Grenzschicht bzw. die additive Füllgutschicht im Empfangs-Signal oftmals kein eindeutig zuordbares Signal-Maximum generiert, welches klassische Abstandsmessverfahren gemäß des Stand der Technik, wie dem TDR-, dem Pulslaufzeit- oder dem FMCW-Verfahren, zu dessen Detektion benötigen. Vielmehr können Empfangs-Signale, die unter komplexen Messbedingungen wie beispielsweise bei Mehrfachreflektionen aufgezeichnet werden, mittels maschineller Lern-Algorithmen wesentlich besser interpretiert werden.

Neben der erfindungsgemäßen Detektion der Grenzschicht ist es auch denkbar, dass die Auswerte-Einheit oder die Empfangs-Einheit des Messgerätes auch ausgelegt ist, um anhand des Empfangs-Signals auf Basis klassischer Abstandsmessverfahren zusätzlich den Füllstand des Füllgutes im Behälter zu bestimmen.

Im Rahmen der Erfindung kann die Auswerte-Einheit insbesondere ausgelegt werden, um anhand des Empfangs-Signals mittels des maschinellen Lern-Algorithmus

- eine vertikale Dicke und/oder eine vertikale Lage der Grenzschicht in Bezug zur Höhe über Behälter-Sole,
- den Massen- bzw. einen Volumen-Anteil des Füllgutes in der Grenzschicht in Abhängigkeit der Höhe über der Sole des Behälters,
- und/oder einen Dielektrizitätswert in Bezug zur Höhe über der Sole des Behälters zu bestimmen. In diesem Fall wird der Massen- bzw. Volumen-Anteil des Füllgutes in der Grenzschicht beispielsweise detektiert, indem die Auswerte-Einheit mittels des maschinellen Lern-Algorithmus entlang der Mess-Sonde eine Verteilung des Dämpfungskoeffizienten, der Leitfähigkeit und/oder der Dielektrizitätskonstante im Behälter ermittelt.

Als "*maschineller Lern-Algorithmus*" definiert sich im Rahmen der Erfindung prinzipiell jeder universelle, mathematische Funktions-Approximator, welcher zumindest eine seiner Eingangsgrößen auf mindestens eine seiner Ausgangsgrößen abbildet. Interne Parameter der entsprechenden, abbildenden Funktionen werden während einer Einlern-Phase anhand von bekannten Trainingsdaten angepasst. Dabei wird als algorithmischer Ansatz insbesondere ein überwachtes Lernen implementiert. In diesem Zusammenhang ist es im Rahmen der Erfindung nicht fest vorgeschrieben, in welcher konkreten Form der maschinelle Lern-Algorithmus implementiert ist. Zum Beispiel kann der maschinelle Lern-Algorithmus in Form von "*Decision Trees*", "*Support Vector Machine*", "*Naive Bayes*", oder "*k Nearest Neighbour*" implementiert werden. Besonders wirksam kann die Grenzschicht jedoch detektiert werden, wenn der maschinelle Lern-Algorithmus auf Basis eines nichtsymbolischen Ansatzes, wie beispielsweise als künstliches neuronales Netzwerk, insbesondere in Form einer tiefen Lernmethode (besser bekannt als "Deep Learning") ausgelegt ist. Näher beschrieben sind maschinelle Lern-Algorithmen beispielsweise in "*Introduction to Artificial Intelligence*" (Wolfgang Ertel, 2017).

Außerdem ist es im Rahmen der Erfindung nicht wesentlich, wie bzw. wo die Auswerte-Einheit realisiert ist. So kann die Auswerte-Einheit beispielsweise als integraler Bestandteil des Messgerätes, oder als ein Bestandteil eines übergeordneten Netzwerkes, wie einer Cloud bzw. einem Server, oder als Bestandteil eines anlagenspezifischen Prozessleitsystems ausgelegt werden.

Das Messgerät ist auf Basis des TDR-Verfahrens ausgelegt, so dass die Übertragungs-Einheit als Mess-Sonde realisiert ist, die sich in den Behälter erstreckt. Korrespondierend hierzu erzeugt die Signalerzeugungs-Einheit das auszusendende Hochfrequenz-Signal in diesem Fall gemäß des TDR-Verfahrens entsprechend pulsweise. Vorteilhaft am TDR-Verfahren in Bezug zur erfindungsgemäßen Idee ist, dass das Empfangs-Signal im Vergleich zu frei abstrahlendem Radar eine insgesamt höhere Signal-Amplitude aufweist, wodurch der maschinelle Lern-Algorithmus die Grenzschicht prinzipiell leichter identifizieren kann.

Korrespondierend zum erfindungsgemäßen Mess-System wird die Aufgabe, die der Erfindung zugrunde liegt, außerdem durch ein entsprechendes Mess-Verfahren zur Detektion einer Grenzschicht eines Füllgutes in einem Behälter mittels des Mess-Systems nach einer der vorhergehend beschriebenen Ausführungsvarianten gelöst. Dabei umfasst das Verfahren folgende Verfahrensschritte:

- Aussenden eines Hochfrequenz-Signals über die Mess-Sonde in den Behälter,
- Aufzeichnen des Empfangs-Signals nach dortiger Reflektion des Hochfrequenz-Signals, und
- derartige Auswertung des Empfangs-Signals mittels des maschinellen Lern-Algorithmus, so dass der Massen- bzw. Volumen-Anteil des Füllgutes in der Grenzschicht detektiert wird, indem der maschinelle Lern-Algorithmus entlang der Mess-Sonde eine Verteilung des Dämpfungskoeffizienten und/oder des Dielektrizitätswertes im Behälter ermittelt.

Dabei kann der maschinelle Lern-Algorithmus in der Einlern-Phase, die vor dem eigentlichen Messbetrieb erforderlich ist, beispielsweise mittels experimentell gewonnener und/oder per Simulation generierter Empfangs-Signale, wie zum Beispiel mittels "*CST Microwave Studio*" eingelernt werden.

Anhand der nachfolgenden Figuren wird die Erfindung näher erläutert. Es zeigt:

  Fig. 1: Ein TDR-basiertes Messgerät zur erfindungsgemäßen Grenzschichtdetektion in einem Behälter, und
  Fig. 2: ein Verfahren zur erfindungsgemäßen Ermittlung der Grenzschicht.

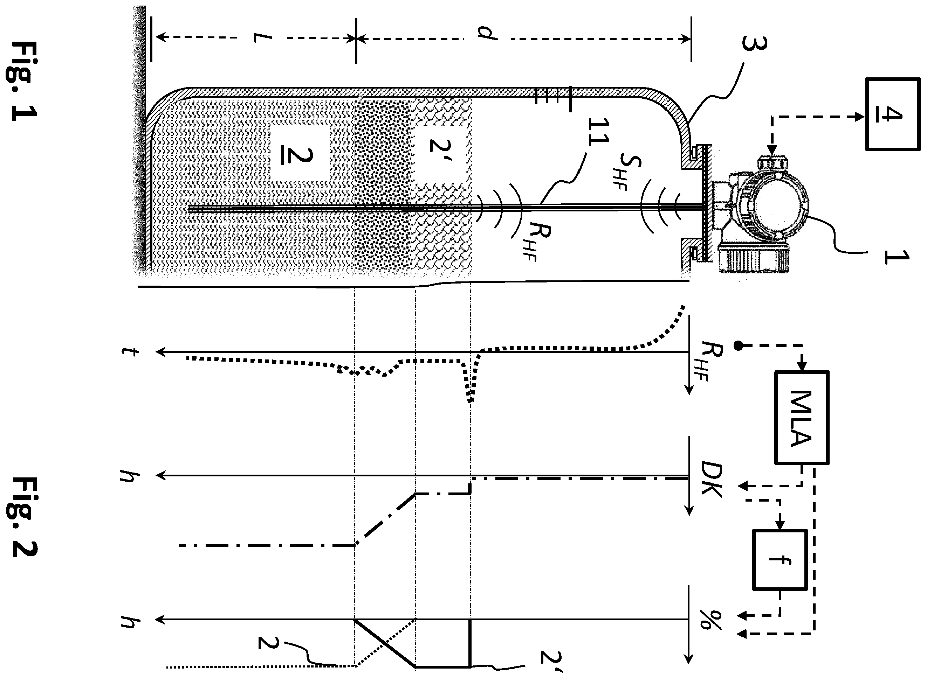

Zum Verständnis erfindungsgemäßer Grenzschicht-Detektion ist in Fig. 1 ein TDR-basiertes Messgerät 1 gezeigt, mittels dem der Füllstand L eines in einem Behälter 3 befindlichen Füllgutes 2, 2' bestimmt werden kann.

Gemäß des TDR-Verfahrens umfasst das Messgerät 1 als Übertragungs-Einheit 11 für Hochfrequenz-Signale $S_{HF}$, $R_{HF}$ gen Füllgut 2, 2' bzw. nach Reflektion im Behälter 3 eine Mess-Sonde 11. Nicht erfindungsgemäß, entgegen der in Fig. 1 gezeigten Ausführungsvariante umfasst das Messgerät 1 im Falle von frei abstrahlendem Radar als Übertragungs-Einheit 11 zumindest eine Antenne. Zur Bestimmung des Füllstandes L erstreckt sich die Mess-Sonde 11 im Behälter-Inneren vom Messgerät 1 an der Oberseite des Behälters 3 bis quasi zur Sole des Behälters 3. Dabei ist die Einbauhöhe h des Messgerätes 1 oberhalb der Behältersole bekannt und im Füllstandsmessgerät 1 oder in einer externen Auswerte-Einheit 4, wie einem dezentralen Server oder einem zentralen Prozessleitsystem, hinterlegt.

Über die Mess-Sonde 11 wird das auszusendende Hochfrequenz-Signal $S_{HF}$ entsprechend des TDR-Verfahrens pulsförmig oder mit einer Frequenzrampe in Richtung des Füllgutes 2, 2' geleitet. Durch den Sprung des Dielektrizitätswertes DK an der Oberfläche des Füllgutes 2, 2' wird das ausgesendete Hochfrequenz-Signal $S_{HF}$ im Anschluss auf Höhe der Füllgut-Oberfläche in der Mess-Sonde 11 reflektiert und nach einer korrespondierenden Signallaufzeit t im Messgerät 1 entsprechend als Empfangs-Signal $R_{HF}$ empfangen. Hierbei hängt die Signallaufzeit t des Signals $S_{HF}$, $R_{HF}$ gemäß

$$t = \frac{2d}{c}$$

vom Abstand d

$$d = h - L$$

der Behälter-Oberseite zur Füllgut-Oberfläche ab. Dabei ist c die Ausbreitungsgeschwindigkeit des Hochfrequenz-Signals $S_{HF}$, $R_{HF}$ entlang der Mess-Sonde 11, die im Bereich der Lichtgeschwindigkeit c liegt.

Zur Erzeugung des Hochfrequenz-Signals $S_{HF}$ umfasst das Füllstandsmessgerät 1 eine entsprechend ausgelegte Signalerzeugungs-Einheit: Im Falle des TDR-Verfahrens kann diese beispielsweise auf einem Kondensator basieren, der zur Erzeugung des ca. 100 ps bis 1 ns dauernden Pulses entsprechend entladen wird. Im Falle von nicht erfindungsgemäßem, frei abstrahlendem Radar gemäß des Pulslaufzeit- oder FMCW-Verfahrens kann die Signalerzeugungs-Einheit beispielsweise einen Frequenz-geregelten Hochfrequenz-Schwingkreis oder einen Schwingquarz umfassen. Damit die Signalerzeugungs-Einheit das Hochfrequenz-Signal $S_{HF}$ gemäß dem jeweiligen Verfahren in der erforderlichen Taktrate pulsförmig oder rampenförmig erzeugt, wird der Kondensator bzw. der Schwingquarz entsprechend getaktet bzw. moduliert angesteuert.

Zwischen der Signalerzeugungs-Einheit des Messgerätes 1 und der Mess-Sonde 11 ist eine Sende-/Empfangs-Weiche zwischengeschaltet, um das Empfangs-Signal $R_{HF}$ nach Reflektion im Behälter 3 einer Empfangs-Einheit zuzuführen, in welcher das Empfangs-Signal $R_{HF}$ digitalisiert bzw. aufgezeichnet wird. Dabei ist die Auslegung der Sende-/Empfangs-Weiche prinzipiell nicht fest vorgegeben. Im Falle des TDR-Verfahrens, wie es bei der in Fig. 1 gezeigten Ausführungsvariante der Fall ist, kann die Sende-/Empfangs-Weiche beispielsweise als rein elektrischer Knoten ausgelegt sein. Insbesondere im Fall von nicht erfindungsgemäßem, frei abstrahlendem Radar kann die Sende-/Empfangs-Weiche beispielsweise als Duplexer realisiert werden.

Zur Ermittlung des Füllstandes L kann das Empfangs-Signal $R_{HF}$ in der Empfangs-Einheit beispielsweise aufgezeichnet werden, indem das Empfangs-Signal $R_{HF}$ gemäß des Pulslaufzeit-Prinzips unterabgetastet wird, so dass das Empfangs-Signal $R_{HF}$ zeitlich um einen definierten Faktor gedehnt wird. Dabei hängt der Zeitdehnungsfaktor von der Abtastrate ab. Hierzu muss die entsprechende Abtastrate zur Erzielung einer hinreichenden Zeitdehnung so gewählt sein, dass sie sich von der Taktrate der ausgehenden Signal-Pulse $S_{HF}$ lediglich im Promillebereich unterscheidet. Durch die Zeitdehnung wird die Bestimmung des Füllstandes L anhand des Empfangssignals $R_{HF}$ aus schaltungstechnischer Sicht vereinfacht. Im Gegensatz zu der in Fig. 1 gezeigten Ausführungsvariante wird das Empfangs-Signal $R_{HF}$ im Falle von nicht erfindungsgemäßem, frei abstrahlendem Radar zusätzlich zur Zeitdehnung gleichgerichtet, so dass das aufgezeichnete Empfangs-Signal $R_{HF}$ in Bezug zu einem festen Referenzpotential lediglich eine Polarität - plus oder minus - aufweist.

Die Ermittlung des Füllstandes L mittels des ggf. zeitgedehnten Empfangs-Signals $R_{HF}$ wird anhand der linken Kurve in Fig. 2 näher veranschaulicht: Die dortige Kurve illustriert den zeitlichen Amplituden-Verlauf des ggf. zeitgedehnten Empfangs-Signals $R_{HF}$. Dabei verhält sich der Abstand d zwischen Behälter-Oberseite und der Füllgut-Oberfläche proportional zur Signallaufzeit-Achse t der in Fig. 2 dargestellten Kurven. Im Idealfall, also ohne jegliche äußere Störeinflüsse, umfasst das Empfangs-Signal $R_{HF}$ zumindest ein Signal-Maximum, welches an der Oberfläche des Füllgutes 2, 2' hervorgerufen wird. Dabei wird der Füllstand L anhand der zum Signal-Maximum korrespondierenden Laufzeit t und der zuvor erwähnten Formeln bestimmt.

Wie in Fig. 1 dargestellt wird, ist oberhalb des Füllgutes 2 eine additive Füllgutschicht 2', wie bspw. eine wässrige Phase eines ansonsten ölbasierten Füllgutes 2 ausgebildet. Dabei ist die additive Füllgutschicht 2' vom Füllgut 2 vertikal durch eine Grenzschicht getrennt, in der beide Komponenten, also Öl und Wasser als Emulsion in jeweils einem definierten Massen- bzw. Volumen-Anteil % vorliegen.

Das Ausführungsbeispiel in Fig. 1 bzw. Fig. 2 verdeutlicht, dass das Signal-Maximum des Empfangs-Signals $R_{HF}$ in diesem Fall nicht durch das eigentliche Füllgut 2, sondern durch die additive Füllgutschicht 2' hervorgerufen wird. Auf Höhe der Grenzschicht bzw. darunter weist das Empfangs-Signals $R_{HF}$ durch Reflektion in der Grenzschicht bzw. an der Oberfläche zum eigentlichen Füllgut 2 zwar auch eine erhöhte Signal-Amplitude auf, jedoch lässt sich hieraus im Zweifelsfall kein dezidiertes Signal-Maximum bestimmen. Daher ist es dem Messgerät 1 unabhängig davon, ob es auf dem Pulslaufzeit- dem FMCW- oder dem TDR-Prinzip basiert, lediglich möglich, den kumulierten Füllstand des Füllgutes 2 und der additiven Füllgutschicht 2' zu ermitteln. Dabei ist es je nach Anwendung bzw. Prozessanlage essenziell, den Füllstand L des reinen Füllgutes 2 zu kennen, wie in Fig. 1 dargestellt ist. In diesem Zusammenhang kann es außerdem notwendig sein, als Parameter das Vorhandensein oder die Dicke der additiven Füllgutschicht 2' zu kennen. Als weiterer Parameter können die Dicke der Grenzschicht bzw. der dort vorherrschende Massen- bzw. Volumen-Anteil % des Füllgutes 2 bzw. des Additivs 2' relevant sein. Dabei soll der Massen- bzw. Volumen-Anteil % möglichst ortsaufgelöst, also in Abhängigkeit der Höhe h über der Behälter-Sole bestimmt werden.

Somit bezieht sich der Begriff "*Grenzschicht-Detektion*" im Rahmen der Erfindung auf die Bestimmung eines oder mehrerer dieser zuvor vorgestellten Parameter.

Erfindungsgemäß können solche Parameter, die in Zusammenhang mit der Grenzschicht stehen, durch die Anwendung eines maschinellen Lern-Algorithmus MLA auf das ggf. zeitgedehnte Empfangs-Signal $R_{HF}$ ermittelt werden. Hierbei ist es prinzipiell nicht festgelegt, welcher Lern-Algorithmus MLA angewendet wird. Als besonders zielführend erweisen sich hierbei jedoch künstliche neuronale Netzwerke, insbesondere "Deep Learning". Durch diese erfindungsgemäße Idee wird das Problem umgangen, dass die Grenzschicht bzw. die additive Füllgutschicht im Empfangs-Signal oftmals kein eindeutig zuordbares Signal-Maximum generiert, welches gemäß des Stand der Technik zu dessen Detektion erforderlich wäre.

Da die Anwendung des maschinellen Lern-Algorithmus MLA ggf. eine hohe Rechenleistung erfordert, ist es vorteilhaft, wenn der maschinelle Lern-Algorithmus MLA nicht im Messgerät 1 selbst implementiert ist, sondern in der externen Auswerte-Einheit 4, da das Messgerät 1 in der Prozessanlage unter Umständen einer begrenzten Leistungsversorgung unterliegt. Dabei kann das Messgerät 1 bzw. dessen Empfangs-Einheit das aufgezeichnete Empfangs-Signal $R_{HF}$ über eine geeignete Schnittstelle, wie etwa "*PROFIBUS*", "*HART*", "*Wireless HART*", "*4-20mA*", "*Bluetooth*" oder "*Ethernet*" an die Auswerte-Einheit 4 übertragen. Somit bildet die Auswerte-Einheit 4 zusammen mit dem Messgerät 1 ein entsprechendes Mess-System zur erfindungsgemäßen Grenzschicht-Detektion im Behälter 3. Sofern auch im Messgerät 1 genügend Rechenleistung zur Verfügung steht, kann der maschinelle Lern-Algorithmus MLA zur Grenzschicht-Detektion auch im Messgerät 4 selbst implementiert werden.

Die Anwendung maschineller Lern-Algorithmen MLA erfordert ein Einlernen des erfindungsgemäßen Mess-Systems unter bekannten Bedingungen. Daher ist das Messgerät 1 vor dem regulären Messbetrieb verschiedenen Einlern-Situationen mit bekannten Parametern, wie

- dem Füllstand L des Füllgutes 2,
- der Dicke der Grenzschicht,
- der Dicke der additiven Füllgutschicht,
- einem bekannten Füllgut Typ bzw. dessen Dielektrizitätswert DK,
- dem Dielektrizitätswert DK der additiven Füllgutschicht

auszusetzen. Dabei können die zugrunde liegenden Empfangs-Signale $R_{HF}$ nicht nur experimentell gewonnen werden, sondern auch mittels Simulation, wie beispielsweise per "*CST Microwave Studio*". Hierdurch wird eine zeitintensive Einlern-Phase in der ProzessAnlage vermieden.

Fig. 2 verdeutlicht eine vorteilhafte Art, wie das erfindungsgemäße Mess-System nach Abschluss der Einlern-Phase anhand des Empfangs-Signals $R_{HF}$ auf Basis des maschinellen Lern-Algorithmus MLA im regulären Messbetrieb die Grenzschicht bzw. zuvor genannte Parameter detektieren kann: Mittels des maschinellen Lern-Algorithmus MLA wird aus dem Signal-Laufzeit t abhängigen Empfangs-Signal $R_{HF}$ zunächst der Dielektrizitätswert DK im Behälter 3 in Abhängigkeit der Signal-Laufzeit t bzw. in Abhängigkeit der Höhe h ermittelt, wie die mittlere Kurve in Fig. 2 darstellt. Darauf basierend kann in der Auswertungs-Einheit 4 mittels einer entsprechend programmierten Logik bzw. Auswertungsfunktion f auf die einzelnen Parameter geschlossen werden:

- Der konstante Dielektrizitätswert DK im oberen Laufzeit-Bereich muss der Atmosphäre oberhalb des Füllgutes bzw. oberhalb der additiven Füllgutschicht 2' zugeordnet werden.
- Ändert sich der Dielektrizitätswert DK über einen definierten Bereich der Signallaufzeit t, so muss in diesem Bereich die Grenzschicht vorliegen.
- Der konstante Dielektrizitätswert DK unterhalb des Bereichs, welcher zur Grenzschicht gehört, muss dem Füllgut 2 zugeordnet werden, wobei der Dielektrizitätswert DK Rückschlüsse auf den Füllgut-Typ zulässt (ein Dielektrizitätswert im Bereich von 80 kann einem zu 100 % wasserhaltigen Medium zugeordnet werden, siehe auch die rechte Kurve in Fig. 2).
- Der konstante Dielektrizitätswert DK oberhalb des Signallaufzeit-Bereichs, welcher zur Grenzschicht gehört, muss der additiven Füllgutschicht 2' zugeordnet werden, wobei der korrespondierende Dielektrizitätswert DK wiederum auf die Art der additiven Füllgutschicht 2' rückschließen lässt (ein Dielektrizitätswert im Bereich von zwei kann bspw. einem zu 100 % ölhaltigen Medium zugeordnet werden),
- Anhand der Lage der Grenzschicht kann der Füllstand L ermittelt werden.

- Anhand der Ausdehnung desjenigen Signallaufzeit-Bereichs, welcher der additiven Füllgutschicht 2' zugeordnet ist, kann die Dicke der additiven Füllgutschicht 2' bestimmt werden,
- Je nachdem, wie sich der Dielektrizitätswert DK innerhalb der Grenzschicht ändert, ändert sich auch der Massen- /Volumen-Anteil % des Füllgutes 2 bzw. der additiven Füllgutes 2' innerhalb der Grenzschicht, wie aus der mittleren und rechten Kurve in Fig. 2 hervorgeht: Da der Dielektrizitätswert DK mit zunehmender Signallaufzeit t bzw. mit abnehmender Höhe h kontinuierlich zunimmt, muss der Anteil % des Füllgutes 2 mit abnehmender Höhe h kontinuierlich (von 0 % auf 100 %) zunehmen. Im Umkehrschluss muss auch der Anteil % des additiven Füllgutes 2' mit zunehmendem Abstand d kontinuierlich (von 100 % auf 0 %) abnehmen.

Anstatt den jeweiligen Anteil % indirekt über den Dielektrizitätswert zu ermitteln, ist es im Rahmen der Erfindung auch denkbar, mittels des maschinellen Lern-Algorithmus MLA den Anteil % unmittelbar aus dem Empfangs-Signal $R_{HF}$ zu ermitteln, wie in Fig. 2 ebenfalls illustriert ist.

Bei dem anhand von Fig. 1 und Fig. 2 gezeigten Ausführungsbeispiel ist neben dem eigentlichen Füllgut 2 lediglich eine additive Füllgutschicht 2' ausgebildet. Es versteht sich dabei von selbst, die erfindungsgemäße Idee auch bei Vorhandensein mehrerer additiver Füllgutschichten 2' anzuwenden.

**Bezugszeichenliste**

| | |
|---|---|
| 1 | Füllstandsmessgerät |
| 2 | Füllgut |
| 2' | Additive Füllgutschicht |
| 3 | Behälter |
| 4 | Auswerte-Einheit |
| DK | Dielektrizitätswert |
| d | Abstand |
| f | Logik-Funktion |
| h | Höhe über Behältersole |
| L | Füllstand |
| MLA | Maschineller Lern-Algorithmus |
| $R_{HF}$ | Empfangs-Signal |
| $S_{HF}$ | Hochfrequenz-Signal |
| t | Signallaufzeit |
| % | Masse- bzw. Volumen-Anteil des Füllgutes |

**Patentansprüche**

1.  Mess-System zur Grenzschicht-Detektion an einem Füllgut (2, 2') in einem Behälter (3), umfassend:

    - Ein Radar-basiertes Messgerät (1), mit

∘ einer Mess-Sonde (11), die sich in den Behälter (3) erstreckt, mittels welcher Hochfrequenz-Signale ($S_{HF}$) gen Füllgut (2, 2') sendbar und nach Reflektion an der Füllgut-Oberfläche als Empfangs-Signale ($R_{HF}$) empfangbar sind,

∘ einer Signalerzeugungs-Einheit, die ausgelegt ist, gemäß des TDR-Verfahrens das auszusendende Hochfrequenz-Signal ($S_{HF}$) zu erzeugen,

∘ einer Empfangs-Einheit, die ausgelegt ist, das Empfangs-Signal ($R_{HF}$) aufzuzeichnen, und

- eine Auswerte-Einheit (4), in welcher ein maschineller Lern-Algorithmus (MLA) derart ausgebildet ist, um anhand des Empfangs-Signals ($R_{HF}$) den Massen- bzw. Volumen-Anteil (%) des Füllgutes (2, 2') in der Grenzschicht zu detektieren, indem der maschinelle Lern-Algorithmus (MLA) entlang der Mess-Sonde (11) eine Verteilung des Dämpfungskoeffizienten und/oder des Dielektrizitätswertes (DK) im Behälter (3) ermittelt.

2. Mess-System nach Anspruch 1, wobei die Auswerte-Einheit (4) ausgelegt ist, mittels des maschinellen Lern-Algorithmus (MLA)

- eine Dicke und/oder eine vertikale Lage der Grenzschicht (2') in Bezug zur Höhe (h) über der Sole des Behälters (3), und/oder
- den Massen- bzw. Volumen-Anteil (%) des Füllgutes (2, 2') in der Grenzschicht in Abhängigkeit der Höhe (h) über der Sole des Behälters (3), und/oder
- einen Dielektrizitätswert (DK) in Bezug zur Höhe (h) über der Sole des Behälters (3),

zu bestimmen.

3. Mess-System nach einem der vorhergehenden Ansprüche, wobei der maschinelle Lern-Algorithmus (MLA) als künstliches neuronales Netzwerk, insbesondere in Form einer tiefen Lernmethode ausgelegt ist.

4. Mess-System nach einem der vorhergehenden Ansprüche, wobei die Auswerte-Einheit (4) ausgelegt ist, um anhand des Empfangs-Signals ($R_{HF}$) den Füllstand (L) des Füllgutes (2) im Behälter (3) zu bestimmen.

5. Mess-System nach einem der vorhergehenden Ansprüche, wobei die Auswerte-Einheit (4) als integraler Bestandteil des Messgerätes (1) ausgelegt ist.

6. Mess-System nach einem der Ansprüche 1 bis 5, wobei die Auswerte-Einheit (4) als ein Bestandteil eines übergeordneten Netzwerkes ausgelegt ist.

7. Verfahren zur Detektion einer Grenzschicht (2') eines Füllgutes (2) in einem Behälter (3) mittels des Mess-Systems nach einem der vorhergehenden Ansprüche, folgende Verfahrensschritte umfassend:

- Aussenden eines Hochfrequenz-Signals ($S_{HF}$) über die Mess-Sonde (11) in den Behälter (3),
- Aufzeichnen des Empfangs-Signals ($R_{HF}$) nach Reflektion des Hochfrequenz-Signals (SHF),
- Derartige Auswertung des Empfangs-Signals ($R_{HF}$) mittels des maschinellen Lern-Algorithmus (MLA), so dass der Massen- bzw. Volumen-Anteil (%) des Füllgutes (2, 2') in der Grenzschicht detektiert wird, indem der maschinelle Lern-Algorithmus (MLA) entlang der Mess-Sonde (11) eine Verteilung des Dämpfungskoeffizienten und/oder des Dielektrizitätswertes (DK) im Behälter (3) ermittelt.

8. Verfahren nach Anspruch 7, wobei der maschinelle Lern-Algorithmus (MLA) mittels experimentell gewonnener und/oder per Simulation generierter Empfangs-Signale ($R_{HF}$) eingelernt wird.

**Claims**

1. Measuring system for boundary layer detection on a filling material (2, 2') in a container (3), comprising:

- A radar-based measuring device (1), with

∘ a measuring probe (11) extending into the container (3), by means of which high-frequency signals (SHF) can be transmitted to the filling material (2, 2') and, after reflection at the filling material surface, can be received as reception signals (RHF),
∘ a signal generation unit designed to generate the high-frequency signal (SHF) to be transmitted in accordance with the TDR method,
∘ a receiving unit designed to record the received signal (RHF), and

- an evaluation unit (4) in which a machine learning algorithm (MLA)

is designed to detect the mass or volume fraction (%) of the filling material (2, 2') in the boundary layer on the basis of the received signal (RHF), by the machine learning algorithm (MLA) determining a distribution of the attenuation coefficient and/or the dielectric constant (DK) in the container (3) along the measuring probe (11).

**2.** Measuring system according to claim 1, wherein the evaluation unit (4) is designed to use the machine learning algorithm (MLA)

- a thickness and/or a vertical position of the boundary layer (2') in relation to the height (h) above the brine in the container (3), and/or
- the mass or volume fraction (%) of the filling material (2, 2') in the boundary layer as a function of the height (h) above the brine in the container (3), and/or
- a dielectric constant (DK) in relation to the height (h) above the brine in the container (3),

**3.** Measuring system according to one of the preceding claims, wherein the machine learning algorithm (MLA) is designed as an artificial neural network, in particular in the form of a deep learning method.

**4.** Measuring system according to one of the preceding claims, wherein the evaluation unit (4) is designed to determine the fill level (L) of the filling material (2) in the container (3) based on the received signal (RHF).

**5.** Measuring system according to one of the preceding claims, wherein the evaluation unit (4) is designed as an integral part of the measuring device (1).

**6.** Measuring system according to one of claims 1 to 5, wherein the evaluation unit (4) is designed as part of a higher-level network.

**7.** Method for detecting a boundary layer (2') of a filling material (2) in a container (3) using the measuring system according to one of the preceding claims, comprising the following method steps:

- Transmitting a high-frequency signal (SHF) via the measuring probe (11) into the container (3),
- recording the received signal (RHF) after reflection of the high-frequency signal (SHF),
- evaluating the received signal (RHF) using machine learning algorithm (MLA) so that the mass or volume fraction (%) of the filling material (2, 2') in the boundary layer is detected by the machine learning algorithm (MLA) determining a distribution of the attenuation coefficient and/or the dielectric constant (DK) in the container (3) along the measuring probe (11).

**8.** Method according to claim 7, wherein the machine learning algorithm (MLA) is trained using experimentally obtained and/or simulation-generated reception signals (RHF).

**Revendications**

**1.** Système de mesure pour la détection de la couche limite sur un produit (2, 2') dans un récipient (3), comprenant :

- Un appareil de mesure (1) basé sur un radar, avec

  ○ une sonde de mesure (11) qui s'étend dans le récipient (3) et à l'aide de laquelle des signaux haute fréquence (SHF) peuvent être émis vers le produit (2, 2') et, après réflexion sur la surface du produit, être reçus sous forme de signaux de réception (RHF),
  ○ une unité de génération de signaux qui est conçue pour générer le signal haute fréquence (SHF) à émettre selon le procédé TDR,
  ○ une unité de réception conçue pour enregistrer le signal de réception (RHF), et

- une unité d'évaluation (4) dans laquelle un algorithme d'apprentissage automatique (MLA) est conçu pour détecter, à l'aide du signal de réception (RHF), la proportion massique ou volumique (%) du produit de remplissage (2, 2') dans la couche limite, l'algorithme d'apprentissage automatique (MLA) déterminant, le long de la sonde de mesure (11), une répartition du coefficient d'atténuation et/ou de la constante diélectrique (DK) dans le réservoir (3).

**2.** Système de mesure selon la revendication 1, dans lequel l'unité d'évaluation (4) est conçue pour, à l'aide de l'algorithme d'apprentissage automatique (MLA)

- une épaisseur et/ou une position verticale de la couche limite (2') par rapport à la hauteur (h) au-dessus de la saumure du réservoir (3), et/ou
- la proportion massique ou volumique (%) du produit de remplissage (2, 2') dans la couche limite en fonction de la hauteur (h) au-dessus de la saumure du réservoir (3), et/ou
- une valeur diélectrique (DK) par rapport à la hauteur (h) au-dessus de la saumure du réservoir (3),

**3.** Système de mesure selon l'une des revendications précédentes, dans lequel l'algorithme d'apprentissage automatique (MLA) est conçu comme un réseau neuronal artificiel, en particulier sous la forme d'une méthode d'apprentissage profond.

**4.** Système de mesure selon l'une des revendications précédentes, dans lequel l'unité d'évaluation (4) est conçue pour déterminer le niveau de remplissage (L) du produit de remplissage (2) dans le récipient (3).

5. Système de mesure selon l'une des revendications précédentes, l'unité d'évaluation (4) est conçue comme partie intégrante de l'appareil de mesure (1).

6. Système de mesure selon l'une des revendications 1 à 5, dans lequel l'unité d'évaluation (4) est conçue comme un composant d'un réseau de niveau supérieur.

7. Procédé de détection d'une couche limite (2') d'un produit de remplissage (2) dans un récipient (3) à l'aide du système de mesure selon l'une des revendications précédentes, comprenant les étapes suivantes :

   - émission d'un signal haute fréquence (SHF) dans le récipient (3) via la sonde de mesure (11),
   - enregistrement du signal de réception (RHF) après réflexion du signal haute fréquence (SHF),
   - Évaluation du signal reçu (RHF) à l'aide du système d'apprentissage automatique algorithme (MLA) de sorte que la proportion massique ou volumique (%) du produit de remplissage (2, 2') dans la couche limite est détectée par le fait que l'algorithme d'apprentissage automatique (MLA) détermine une distribution du coefficient d'atténuation et/ou de la constante diélectrique (DK) dans le réservoir (3) le long de la sonde de mesure (11).

8. Procédé selon la revendication 7, dans lequel l'algorithme d'apprentissage automatique (MLA) est entraîné à l'aide de signaux de réception (RHF) obtenus expérimentalement et/ou générés par simulation.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1007743 B2
- EP 2722655 A1

- US 2012299768 A1